Europäisches Patentamt

European Patent Office

Office européen des brevets

(11) Veröffentlichungsnummer: **0 447 775 A1**

# EUROPÄISCHE PATENTANMELDUNG

(21) Anmeldenummer: 91101541.0

(22) Anmeldetag: 05.02.91

(51) Int. Cl.⁵: **G01N 25/00**, G01B 15/02

(30) Priorität: 05.02.90 DE 4003407

(43) Veröffentlichungstag der Anmeldung:
25.09.91 Patentblatt 91/39

(84) Benannte Vertragsstaaten:
DE ES FR GB IT

(71) Anmelder: **Siemens Aktiengesellschaft**
**Wittelsbacherplatz 2**
**W-8000 München 2(DE)**

(72) Erfinder: **Huller, Dieter, Dr.**
**Mähfeldstrasse 26**
**W-7541 Schwann(DE)**
Erfinder: **Beyfuss, Martin**
**Kirchweg 2**
**W-8000 München 70(DE)**

(54) **Verfahren und Anordnung zum Prüfen der Oberfläche von bewegten Objekten.**

(57) Zum Messen der Dicke von Beschichtungen bewegter Objekte (1) mittels photothermischer Wärmewellenanalyse wird auf der zu untersuchenden Oberfläche ein Fleck (2) bestrahlt, dessen Abmessung (L1) in Richtung der Bewegung des Objektes (1) mindestens gleich der Strecke ist, um die das Objekt (1) während mehrerer Perioden der Modulation der Heizstrahlung relativ zum Bestrahlungsfleck (2) bewegt wird. Innerhalb des Bestrahlungsflecks (2) ist ein Meßfleck (7) so angeordnet, daß eine über mehrere Perioden der Modulation der Heizstrahlung bestrahlter Bereich der Oberfläche erfaßt wird.

Die Erfindung wird eingesetzt bei der Lackschicht-Dickenmessung in der Automobilfertigung.

FIG 1

EP 0 447 775 A1

## VERFAHREN UND ANORDNUNG ZUM PRÜFEN DER OBERFLÄCHE VON BEWEGTEN OBJEKTEN

Die Erfindung betrifft ein Verfahren und Anordnung zum Prüfen der Oberfläche von bewegten Objekten mittels photothermischer Wärmewellenanalyse gemäß den Oberbegriffen der Ansprüche 1 und 5.

Die photothermische Wärmewellenanalyse beruht darauf, die Oberfläche eines Objektes zeitlich veränderlich, im allgemeinen mittels intensitätsmodulierter Heizstrahlung aufzuheizen und den daraus resultierenden zeitlichen Verlauf der Oberflächentemperatur auszuwerten, der von der Dicke sowie den thermischen Kenngrößen der Oberflächenschicht abhängt. Im Prinzip kann die Aufheizung einen zeitlichen Verlauf haben, der zwischen einem Einzelimpuls und einer periodischen Form liegt. Im letzteren Falle stellt sich der Temperaturverlauf hinsichtlich Amplitude und Phase in charakteristischer Weise ein.

Ein solches Meßverfahren und eine Anordnung zu dessen Durchführung sind beispielsweise in der Zeitschrift "Werkstofftechnik" 15 (1984), Seiten 140 bis 148 beschrieben. In dieser bekannten Anordnung wird die von einem Laser erzeugte Heizstrahlung in der Intensität moduliert und auf das Meßobjekt gerichtet. Die absorbierte Heizstrahlung erzeugt dann sogenannte Wärmewellen, die an der Oberfläche des Meßobjektes über die resultierende Modulation der thermischen Emission nachgewiesen werden können. Hierzu wird ein Infrarot-Detektor verwendet, dessen Ausgangssignal in einem phasenempfindlichen Verstärker mit dem Ausgangssignal des Modulators als Referenzsignal verglichen wird. Die Phasendifferenz gibt Aufschluß über die jeweilige Schichtdicke. Darüber hinaus kann das Verfahren der photothermischen Wärmewellenanalyse im Rahmen der zerstörungsfreien Werkstoffprüfung in vielfältiger Weise angewandt werden, wie in der DE-OS 39 13 474 beschrieben ist.

In der Zeitschrift "Technisches Messen" 49 (1982), Heft 11, Seiten 391 bis 398 ist darauf hingewiesen, daß Vorkehrungen zum Trennen von Aufheiz- und Eigenstrahlung zu treffen sind. Als geeignete Maßnahme wird vorgeschlagen, in unterschiedlichen Spektralbereichen zu arbeiten, indem z. B. vor dem Strahlungsempfänger ein Filter angebracht wird. Ferner wird eine räumliche Trennung von Aufheiz- und Meßstelle vorgeschlagen, indem das Meßobjekt bewegt wird und die Meßstelle in Bewegungsrichtung hinter der Aufheizstelle angeordnet wird. Dieser Vorschlag weist darauf hin, daß Aufheiz- und Meßstelle sich nicht zu überdecken brauchen, wenn das Meßobjekt bewegt wird. Nachteilig ist aber, daß der Meßeffekt kleiner wird und abhängig von der Bewegungsgeschwindigkeit ist.

Das Problem, die Dicke und/oder die thermischen Eigenschaften von Folien und dünnen Oberflächenbeschichtungen von bewegten Meßobjekten zu messen, wird in der deutschen Patentanmeldung P 39 39 877.3 in der Weise zu lösen versucht, daß die Richtungen der auf das Meßobjekt einfallenden Heizstrahlung und der vom Meßobjekt emittierten thermischen Strahlung entgegengesetzt sind. In einer solchen Anordnung ist zwar der Einfluß der Bewegung des Meßobjektes in Strahlrichtung und der Einfluß von Kippbewegungen vermindert, jedoch bewegt sich in Fertigungsprozessen das Meßobjekt in der Regel an der feststehenden Meßanordnung vorbei, also senkrecht zur Strahlrichtung. In der deutschen Patentanmeldung P 39 39 877.3 ist für Messungen an derart bewegten Objekten vorgeschlagen, einen Meßkopf zu schaffen, der leicht und beweglich ist und daher dem Objekt nachgeführt werden kann. Die hierzu erforderliche Nachführeinrichtung erfordert einen zusätzlichen unerwünschten Aufwand.

Der vorliegenden Erfindung liegt die Aufgabe zugrunde, das im Oberbegriff des Anspruchs 1 angegebene Verfahren so auszugestalten, daß es auch bei feststehender Meßanordnung zur Oberflächenprüfung von Objekten verwendbar ist, die sich senkrecht zur Richtung der Heizstrahlung bewegen. Ferner soll eine Anordnung geschaffen werden, mit der das Verfahren nach Anspruch 1 an bewegten Objekten ausgeführt werden kann.

Diese Aufgaben werden mit den in den Ansprüchen 1 und 5 angegebenen Maßnahmen gelöst.

Der Bestrahlungsfleck hat also eine solche Ausdehnung, daß eine Stelle der zu prüfenden Oberfläche, nachdem sie bei der Bewegung des Objektes vom Bestrahlungsfleck erfaßt wurde, mehrere Modulationsperioden der Heizstrahlung ausgesetzt ist, bevor sie in den Meßfleck eintritt. Die Anzahl dieser Perioden sollte mindestens fünf sein, ein bevorzugter Wert ist etwa zehn. Vorzugsweise ist die Breite des Bestrahlungsflecks etwa gleich der des Meßflecks. Ist der Bestrahlungsfleck schmaler, wird die Meßempfindlichkeit beeinträchtigt; ist er breiter, ist unnötig viel Heizstrahlungsenergie aufzubringen. Der Bestrahlungsfleck ist daher zweckmäßig langgestreckt. In einer Ausgestaltung des Verfahrens befindet sich der Meßfleck an einem Ende des Bestrahlungsflecks. In diesem Falle kann das Verfahren nur für eine Bewegungsrichtung verwendet werden. In einer anderen Ausgestaltung befindet sich der Meßfleck in der Mitte des Bestrahlungsflecks. Das Verfahren kann dann für zwei entgegengesetzte Bewegungsrichtungen eingesetzt werden. Die erforderliche Heizstrahlungsenergie ist dann etwa doppelt so groß wie in der ersten Ausgestaltung.

Die optische Einrichtung der Anordnung nach Anspruch 5 zur Durchführung des erfindungsgemäßen Verfahrens, welche den Strahlungsfleck erzeugt, kann unterschiedlich ausgestaltet sein. Bei geradliniger Bewegung des Objektes, was in der Fertigungstechnik in der Regel der Fall ist, kann eine kreisförmige Strahlungsquelle, z. B. das Ende eines Lichtleiterbündels, mittels einer Zylinderlinse als langgestreckter Bestrahlungsfleck auf die Objektoberfläche abgebildet werden. Eine andere bevorzugte Möglichkeit besteht darin, die Heizstrahlung durch ein Lichtleitfaserbündel zu führen, dessen Austrittsfläche entsprechend der Bewegungsrichtung des Objektes geformt ist. Bei Drehbewegungen wird daher die Austrittsfläche die Form eines Kreisbogens haben. Schließlich kann eine mit der modulierten Heizstrahlung beleuchtete Blende verwendet werden.

Anhand der Zeichnung, in der die Ausführungsbeispiele veranschaulicht sind, werden im folgenden die Erfindung sowie deren Ausgestaltungen näher beschrieben und erläutert.

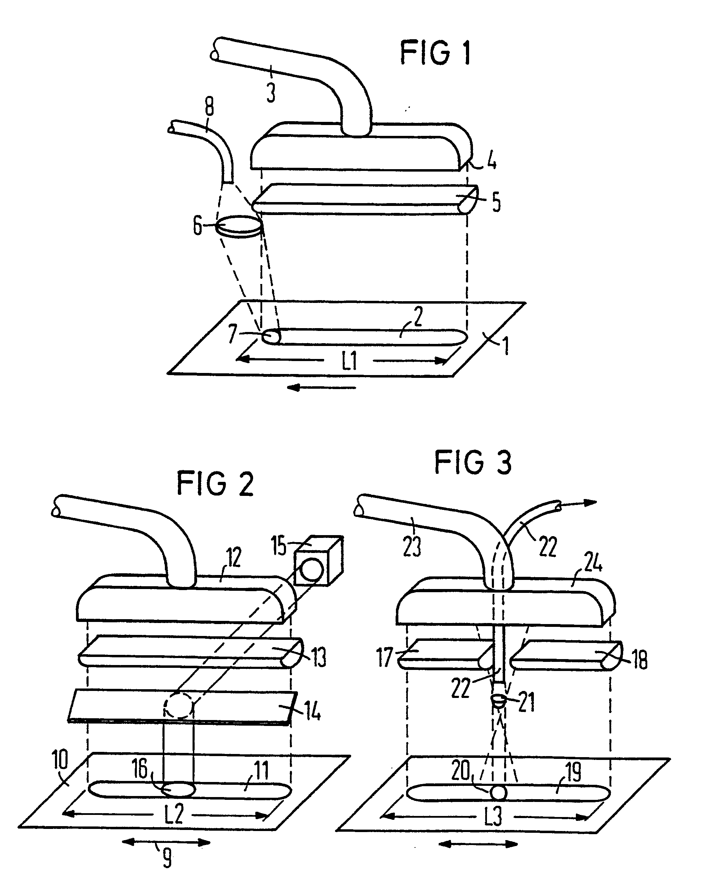

In Figur 1 ist mit 1 ein Objekt bezeichnet, das in Pfeilrichtung bewegt wird und das mit einer Oberflächenbeschichtung, z. B. mit einem Lack versehen ist, deren Dicke gemessen werden soll. Hierzu wird die Oberfläche des Objektes im Bereich eines Bestrahlungsfleckes 2 einer intensitätsmodulierten Heizstrahlung ausgesetzt. Diese Strahlung wird in bekannter Weise in einer nicht dargestellten Lichtquelle, zweckmäßig einem Laser, erzeugt und in ein Lichtleitfaserbündel 3 eingespeist. Der Querschnitt dieses Faserbündels, der zunächst etwa kreisförmig ist, ist im Bereich der Austrittsfläche 4 in einem Querschnittswandler so geformt, daß die austretende modulierte Heizstrahlung mittels einer Zylinderlinse 5 auf der Oberfläche des Objektes 1 den Bestrahlungsfleck 2 bildet. Die Austrittsfläche 4 kann z. B. sehr schmal gehalten und in etwa in der Brenn-Linie der Zylinderlinse 5 angeordnet sein, so daß die aus dieser austretende Strahlung gebündelt ist und die Größe des Bestrahlungsfleckes nur in geringem Maße vom Abstand des Objektes 1 von der Zylinderlinse 5 abhängig ist. Der Bestrahlungsfleck 2 kann auch in anderer Weise erzeugt werden, z. B. dadurch, daß die aus einer etwa kreisrunden Austrittsfläche eines Lichtleiterbündels austretende Heizstrahlung mittels einer Zylinderlinse in der Längsrichtung des Bestrahlungsfleckes 2 aufgeweitet und auf die zu prüfende Oberfläche geworfen wird. Seitlich neben der Zylinderlinse 5 befindet sich eine Optik 6, welche einen Meßfleck 7, der sich am Ende des Bestrahlungsflecks 2 befindet, auf die Eintrittsfläche eines Lichtleiters 8 abbildet. Die aufgenommene und vom Lichtleiter 8 einem Strahlungsempfänger zugeführte Strahlung setzt sich zusammen aus der reflektierten Heizstrahlung und thermischer Strahlung, die durch das Aufheizen der Oberfläche mit der Heizstrahlung bedingt ist. Ihre Wellenlänge liegt in einem Bereich, der von der Wellenlänge der Heizstrahlung verschieden ist, so daß sie mittels eines Filters von der Heizstrahlung getrennt und gesondert dem Strahlungsempfänger zugeführt werden kann. Sie ist entsprechend der Modulation der Heizstrahlung moduliert. Gemäß der Erfindung ist die Länge des Brennflecks 2 so auf die Bewegungsgeschwindigkeit des Objektes 1 abgestimmt, daß es mehrere Modulationsperioden dauert, bis die am rechten Ende in den Bestrahlungsfleck eintretenden Stellen am Meßfleck 7 angekommen sind. Vorteilhaft entspricht die Länge des Bestrahlungsflecks 2 mindestens etwa zehn Modulationsperioden. In manchen Anwendungsfällen kann aber auch eine Länge entsprechend fünf Modulationsperioden ausreichend sein. Eine mehr als 15 bis 20 Modulationsperioden entsprechende Länge bringt im allgemeinen keinen Vorteil, dagegen den Nachteil, daß eine größere Heizstrahlungsenergie erforderlich ist.

Je nach Anwendungsfall beträgt die Modulationsfrequenz 1 Hz bis 100 Hz, so daß z. B. bei einer Bewegungsgeschwindigkeit des Objektes 1 von 10 cm/sec der Bestrahlungsfleck eine Länge bis zu 10 cm hat. Man wählt die Länge des Bestrahlungsflecks zweckmäßig entsprechend der maximalen Geschwindigkeit des Objektes 1 und der niedrigsten Modulationsfrequenz. Es kann dann bei allen anderen Geschwindigkeiten und Frequenzen mit derselben Bestrahlungsflecklänge gemessen werden.

Da die Heizstrahlung und die vom Meßfleck emittierte und von der Optik 6 aufgenommene Strahlung etwa parallel gerichtet sind, ist der Brennfleck 7 auch bei Bewegung des Objektes 1 in Richtung der Heizstrahlung oder bei Kippen des Objektes 1 stets am Ende des Bestrahlungsfleckes 2, so daß die Messungen durch Änderungen des Abstandes des Objektes 1 von der feststehenden Meßanordnung nur wenig beeinträchtigt wird.

Im Ausführungsbeispiel nach Figur 2 wird die Heizstrahlung wieder über einen Lichtleiter geführt, dessen Querschnitt mittels eines Querschnittwandlers 12 so geändert wird, daß das austretende Licht mittels einer Zylinderlinse 13 als langgestreckter Bestrahlungsfleck 11 senkrecht auf die Oberfläche eines Objektes 10 fällt. Im Gegensatz zur Anordnung nach Figur 1, in der das Objekt nur in einer Richtung bewegt werden kann, sind mit der Anordnung nach Figur 2 Messungen bei Bewegung in den beiden mit einem Doppelpfeil 9 angedeuteten Richtungen des Objektes 10 möglich. Hierzu wird die von einem in der Mitte des Bestrahlungsflecks 11 liegenden Meßflecks 16 emittierte thermische Strahlung nach Reflexion an einem halbdurchlässigen Spiegel 14 von einem Strahlungsempfänger 15 aufgenommen und ausgewertet. Bei gleicher Modulationsfrequenz und Bewegungsgeschwindigkeit ist die Mindestlänge des Bestrahlungsflecks 11 etwa doppelt so groß wie die des mit der Anordnung nach Figur 1 erzeugten. Der Einsatz des halbdurchlässigen Spiegels 14 bewirkt, daß die Heizstrahlung und die vom Meßfleck 16 emittierte thermische Strahlung exakt einander entgegengerichtet sind und die Messung der Schichtdicke der Oberfläche des Objektes 10 in weiten Grenzen unabhängig vom Abstand des Objektes 10 von der Meßanordnung sowie vom Winkel zwischen der Strahlungsrichtung und der Oberflächennormalen ist. Es können somit auch Oberflächen von gewölbten bewegten Objekten geprüft werden.

Der halbdurchlässige Spiegel 14 braucht sich nicht über die gesamte Länge der Zylinderlinse 13 bzw. des Bestrahlungsflecks 11 erstrecken, er muß lediglich so groß sein, daß die vom Meßfleck 16 emittierte thermische Strahlung in den Strahlungsempfänger 15 reflektiert wird. Allerdings muß dann eine geringe ungleichmäßige Ausleuchtung des Bestrahlungsflecks 11 in Kauf genommen werden.

Die Aufnahmeoptik des Strahlungsempfängers wird man möglichst nahe am halbdurchlässigen Spiegel anbringen. Sie kann auch zwischen dem halbdurchlässigen Spiegel bzw. zwischen der Zylinderlinse 13 und dem Objekt 10 angeordnet sein; doch führt dies zu einer ungleichmäßigen Ausleuchtung des Bestrahlungsfleckes 11.

Der halbdurchlässige Spiegel kann auch zwischen der Zylinderlinse 13 und dem Querschnittswandler 12 oder gar am andern Ende des Lichtleiters, an den die Heizstrahlung eingestrahlt wird, angeordnet sein. Im letzteren Falle sind Bestrahlungsfleck und Meßfleck deckungsgleich. Auch in einer solchen Anordnung ist die Bedingung erfüllt, daß thermische Strahlung ausgewertet wird, die von solchen Stellen emittiert wird, die mindestens mehrere Perioden der Modulationsfrequenz der Heizstrahlung ausgesetzt waren.

Figur 3 veranschaulicht eine weitere Anordnung, mit der die Oberflächen von bewegten Objekten geprüft werden können, wobei zwei entgegengesetzte Bewegungsrichtungen zugelassen sind. Sie ist im wesentlichen eine Verdoppelung der Anordnung nach Figur 1. Sie enthält daher zwei Zylinderlinsen 17, 18, welche die aus einem Querschnittswandler 24 eines Lichtleiters 23 austretende Heizstrahlung als Bestrahlungsfleck 19 auf die Oberfläche eines bewegten Objektes werfen. Damit der Bestrahlungsfleck 19 gleichförmig ausgeleuchtete ist, sind die beiden Zylinderlinsen 17, 18 gegeneinander geneigt. Zwischen ihnen befindet sich das Ende eines Empfangslichtleiters 22, auf dessen Eintrittsfläche eine sphärische Optik 21 die von einem Meßfleck 20 emittierte thermische Strahlung bündelt.

**Patentansprüche**

1. Verfahren zum Prüfen der Oberfläche von bewegten Objekten mittels photothermischer Wärmewellenanalyse, bei dem die zu überprüfende Oberfläche in einem Bestrahlungsfleck (2) einer intensitätsmodulierten Heizstrahlung ausgesetzt wird und bei dem in einem Meßfleck (7) die von der bestrahlten Oberfläche emittierte thermische Strahlung erfaßt und ausgewertet wird, **dadurch gekennzeichnet, daß** die Abmessungen des Bestrahlungsflecks (2) in Richtung der Bewegung des Objekts mindestens gleich der Strecke ist, um die das Objekt (1) während mehrerer Perioden der Modulation der Heizstrahlung relativ zum Bestrahlungsfleck (2) bewegt wird, und daß der Meßfleck (7) innerhalb des Bestrahlungsflecks so angeordnet wird, daß ein über mehrere Perioden der Modulation der Heizstrahlung bestrahlter Bereich der Oberfläche erfaßt wird.

2. Verfahren nach Anspruch 1, **dadurch gekennzeichnet, daß** die Abmessungen des Bestrahlungsflecks (2) in Richtung der Bewegung des Objekts (1) mindestens gleich der Strecke ist, um die das Objekt (1) während mindestens fünf, vorzugsweise etwa zehn Perioden der Modulation der Heizstrahlung relativ zum Bestrahlungsfleck bewegt wird und daß der Meßfleck (7) innerhalb des Bestrahlungsflecks (2) so angeordnet wird, daß ein mindestens fünf, vorzugsweise etwa zehn Perioden der Modulation der Heizstrahlung bestrahlter Bereich der Oberfläche erfaßt wird.

3. Verfahren nach Anspruch 1 oder 2, **dadurch gekennzeichnet, daß** der Meßfleck (7) am einen Rand des Bestrahlungsflecks (2) angeordnet ist und die Bewegungsrichtung des Objektes (1) relativ zum Bestrahlungsfleck (2) vom gegenüberliegenden Rand des Bestrahlungsflecks (2) zum Meßfleck (7) gerichtet ist.

4. Verfahren nach Anspruch 1 oder 2, **dadurch gekennzeichnet, daß** der Meßfleck (16) in der Mitte des Bestrahlungsflecks (11) liegt und der Abstand des Meßflecks (9) vom Rand des Bestrahlungsflecks (11), in Richtung der relativen Bewegung des Objektes (1) gemessen, jeweils gleich der Strecke ist, welche das Objekt (1) während mehrerer Perioden der Modulation der Heizstrahlung zurücklegt (Figur 2).

5. Anordnung zur Durchführung der Verfahren nach den Ansprüchen 1 bis 4 mit einer Heizeinrichtung zum Erzeugen der auf die zu prüfende Oberfläche gerichteten intensitätsmodulierten Heizstrahlung und mit einem Strahlungsempfänger, welcher die innerhalb eines Meßflecks von der bestrahlten, zu prüfenden Oberfläche emittierte thermische Strahlung erfaßt, **dadurch gekennzeichnet,** daß die Heizeinrichtung an der Austrittsstelle der Heizstrahlung eine optische Einrichtung aufweist, welche die Heizstrahlung auf die zu prüfende Oberfläche richtet und dort den Bestrahlungsfleck erzeugt.

6. Anordnung nach Anspruch 5, **dadurch gekennzeichnet,** daß die Heizstrahlung über ein Lichtleiterphaserbündel (3) geführt ist, dessen Heizstrahlungsaustrittsfläche (4) entsprechend der Länge des Bestrahlungsflecks (2) und der Breite des Meßflecks (7) geformt ist.

7. Anordnung nach Anspruch 6, **dadurch gekennzeichnet,** daß bei geradliniger Bewegung des Objektes (1) eine Zylinderlinse (5) zur Abbildung der Austrittsfläche (4) des Lichtleiterfaserbündels (3) auf die Oberfläche des Objektes (1) vorhanden ist.

8. Anordnung nach Anspruch 6 oder 7, **dadurch gekennzeichnet,** daß die Heizstrahlung und die von der bestrahlten Oberfläche emittierte und von dem Strahlungsempfänger erfaßte thermische Strahlung einander entgegengerichtet sind.

9. Anordnung nach Anspruch 8, **dadurch gekennzeichnet,** daß im Strahlengang der Heizstrahlung ein teildurchlässiger Spiegel (14) angeordnet ist.

10. Anordnung nach Anspruch 6, **dadurch gekennzeichnet,** daß in der Austrittsfläche des die Heizstrahlung führenden Lichtleiterfaserbündels die Eintrittsfläche eines Lichtleiters angeordnet ist, auf welche die vom Meßfleck emittierte thermische Strahlung fällt.

11. Anordnung nach Anspruch 7 und 10, **dadurch gekennzeichnet,** daß die Zylinderlinse die vom Meßfleck emittierte thermische Strahlung auf die Eintrittsfläche des Lichtleiters wirft.

12. Anordnung nach einem der Ansprüche 6 bis 9, **dadurch gekennzeichnet,** daß ein gesonderter Lichtleiter (8, 22) vorhanden ist, der vom Meßfleck (7, 20) emittierte thermische Strahlung aufnimmt und zu einem Detektor leitet.

13. Anordnung nach einem der Ansprüche 6 bis 12, **dadurch gekennzeichnet,** daß zwei Zylinderlinsen (17, 18) die Heizstrahlung auf die Oberfläche des Objektes projizieren und daß sich zwischen den beiden Zylinderlinsen (17, 18) ein Lichtleiter (22) befindet, auf dessen Eintrittsfläche die vom Meßfleck (20) emittierte thermische Strahlung projiziert wird.

14. Anordnung nach Anspruch 13, **dadurch gekennzeichnet,** daß die beiden Zylinderlinsen (17, 18) so gegeneinander geneigt sind, daß der Bestrahlungsfleck (19) gleichmäßig ausgeleuchtet ist.

FIG 1

FIG 2

FIG 3

| **EINSCHLÄGIGE DOKUMENTE** | | | EP 91101541.0 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁴) |
| P,A | <u>DE - A1 - 3 913 474</u><br>(SIEMENS AG)<br>   * Zusammenfassung; Seite 1,<br>   Zeilen 1-34; Seiten 5, Zeilen<br>   18-68; Ansprüche; Fig. 1-10 * | 1,5,6,<br>8,9 | G 01 N 25/00<br>G 01 B 15/02 |
| A | <u>DE - A1 - 3 631 652</u><br>(SIEMENS AG)<br>   * Gesamt * | 1,5,6 | |
| A | <u>GB - A - 1 151 081</u><br>(AUTOMATION INDUSTRIES)<br>   * Ansprüche; Fig. 1,2 * | 1,5 | |
| A | <u>US - A - 3 434 332</u><br>(MALEY)<br>   * Gesamt * | 1,5 | |
| A | <u>EP - A2 - 0 102 730</u><br>(THERMA-WAVE INC.)<br>   * Zusammenfassung; Ansprüche;<br>   Fig. 1,2 * | 1 | |
| A | IBM TECHNICAL DISCLOSURE<br>BULLETIN, Vol. 28, No. 7,<br>Dezember 1985<br>   * Seiten 3037-3039 * | 1,5 | RECHERCHIERTE SACHGEBIETE (Int. Cl.⁴)<br><br>G 01 B 15/00<br>G 01 N 25/00 |
| D,A | TECHNISCHES MESSEN, 49.Jahr-<br>gang, Heft 11, 1982<br>C. LINHART UND A. WECKENMANN<br>"Berührungslose Bestimmung<br>der Dicke von Oberflächenbe-<br>schichtungen durch thermische<br>Meßverfahren"<br>   * Seiten 391-398 * | 1,5 | |

Der vorliegende Recherchenbericht wurde für alle Patentansprüche erstellt.

| Recherchenort | Abschlußdatum der Recherche | Prüfer |
|---|---|---|
| WIEN | 04-07-1991 | ERBER |

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82